# EUROPEAN PATENT APPLICATION

(11) **EP 2 275 846 A1**
(43) Date of publication of application: **19.01.2011**
(21) Application number: 10157707.0
(22) Date of filing: 25.03.2010
(51) Int. Cl.: G02B 6/00

(54) **Display apparatus and television**

(30) Priority: 15.07.2009 KR 20090064312
(71) Applicant: SAMSUNG ELECTRONICS CO., LTD., Suwon-si, Gyeonggi-do (KR)
(72) Inventor: Jung, Il-yong, Gyeonggi-do (KR); Seong, Ki-bum, Gyeonggi-do (KR); Yun, Sang-un, Seoul (KR)
(74) Representative: Walaski, Jan Filip

(57) **Abstract**

A display apparatus and a television are provided. The display apparatus includes a display panel which is divided into display areas; a plurality of light guide plates which output light to the display areas of the display panel; and a plurality of light sources, each of which generates light to be inputted into a lateral side of a respective one of the light guide plates, and is arranged corresponding to the lateral side of the respective light guide plate. The plurality of light sources may be arranged such that among the light sources arranged corresponding to the lateral side of one of the light guide plates, a first illumination direction of some of the light sources is different from a second illumination direction of others of the light sources.

## Description

Apparatuses consistent with the present invention relate to display apparatuses that supply light from light sources and light guide plates in order to display images, and more particularly, to a display apparatus having light sources and light guide plates configured so as to make the apparatus slim and the images vivid in picture quality.

A display apparatus such as a television (TV) or a monitor can display broadcasting signals or image data of various formats because of a display panel provided therein to display an image. Forms of the display panel are diverse: a liquid crystal panel, a plasma panel and so on, and the display panel is employed by a variety of display apparatuses. As the liquid crystal panel cannot inherently generate light, the display apparatus is provided with a backlight unit to supply light to the panel.

As a light source to generate light, a light emitting diode (LED) component has superiority in environmental pollution and response time, etc. to a cold cathode fluorescent lamp (CCFL). Accordingly, the backlight unit of the display apparatus increasingly employs the LED. The backlight unit can be classified into direct-type or edge-type, according to where the light sources are arranged.

In a direct-type backlight unit, a plurality of light sources are arranged in parallel along the back face of the liquid crystal panel, and thus, each light source can transmit light directly to the panel in front of the backlight unit. In an edge-type backlight unit, a plurality of light sources are arranged in the form of a bar along the edge of the panel, and thus, light from the light sources is transmitted to the panel through a light guide plate.

With this configuration, the direct-type backlight unit can easily embody a technology to drive light sources, such as local dimming, because each light source transmits light to the panel in front thereof. However, as the light sources are arranged in the back face thereof, it is difficult to make the display apparatus slim. A related art edge-type backlight unit serves to make the display apparatus slim as the light sources are arranged in a lateral surface of the panel, but it is difficult to embody the local dimming technology as light from the light sources is transmitted to the panel through the light guide plates.

Accordingly, it is desirable to provide a backlight unit and a display apparatus that make the display apparatus slim and simultaneously embody the light source driving technology such as local dimming.

Exemplary embodiments of the present invention overcome the above disadvantages and other disadvantages not described above. Also, the present invention is not required to overcome the disadvantages described above, and an exemplary embodiment of the present invention may not overcome any of the problems described above.

According to an aspect of the present invention, there is provided a display apparatus including a display panel; a plurality of light guide plates outputting light to each divided display area of the display panel; and a plurality of light sources generating light to be inputted into a lateral side of each of the light guide plates and arranged corresponding to the lateral side of the each light guide plate, wherein the plurality of light sources are arranged in such a manner that among the plurality of light sources arranged corresponding to the lateral side of one of the light guide plate, a first illumination direction by at least a part of the light sources is different from a second illumination direction by at least a part of the other light sources arranged corresponding to the lateral side of the one of the light guide plates.

The first illumination direction and the second illumination direction may be symmetrical to each other.

The display apparatus may further include a light source module having the plurality of light sources serially arranged along the lateral side of each of the light guide plates, wherein one of the light source modules has at least one of the light sources illuminated to the first illumination direction and at least one of the light sources illuminated to the second illumination direction.

The display apparatus may further include a plurality of light source blocks including a plurality of blocks including one, or two or more light sources adjacent to each other along the arrangement order of the plurality of light sources, wherein the two adjacent light source blocks have different illumination directions.

The light source module may include a transparent substrate, and the plurality of light sources may be mounted on at least a lateral side of the transparent substrate.

The transparent substrate may include transparent electric wiring to drive the plurality of light sources.

The plurality of light sources may be divided into a plurality of light source groups in the unit of at least one light source, and the display apparatus may further include a controller performing local dimming by controlling the brightness per each light source group.

The light source may include a light emitting diode (LED) component.

According to another aspect of the present invention, there is provided a display apparatus including an image receiving unit receiving an image; an image processing unit processing the image received by the image receiving unit; a display panel displaying thereon the image processed by the image processing unit; a backlight unit supplying light to the display panel so as to display the image, wherein the backlight unit may include a plurality of light guide plates outputting light to each divided display area of the display panel; and a plurality of light sources generating light to be inputted into a lateral side of each of the light guide plates, arranged corresponding to the lateral side of each light guide plate, wherein the plurality of light sources are arranged in such a manner that among the plurality of light sources arranged corresponding to the lateral side of one of the light guide plate, a first illumination direction by at least a part of the light sources is different from a second illumination direction by at least a part of the other light sources arranged corresponding to the lateral side of the one of the light guide plates.

The plurality of light sources may be divided into a plurality of light source groups in the unit of at least one light source, and the backlight unit may further include a controller performing local dimming by controlling the brightness per each light source group.

The plurality of light sources may be alternately opposite in illumination direction according to the arrangement order in the unit of at least one light source.

According to still another aspect of the present invention, there is provided a display apparatus including a display panel; a light guide plate divided in plural; a light source module having a plurality of light sources, arranged between the divided light guide plates, inputting light into lateral sides of the divided light guide plates; and a controller controlling brightness of the plurality of light sources, wherein the plurality of light sources provided in the light source module are alternately opposite in illumination direction according to the arrangement order in the unit of at least one light source.

The plurality of light sources may be divided into a plurality of light source groups in the unit of at least one light source, and the controller may perform local dimming by controlling the bright per each light source group.

The plurality of light sources provided in the one light source module may be arranged in rows.

The light source module may include a support substrate on which electric wiring for the plurality of light sources is formed, and the plurality of light sources may be mounted perpendicularly on the support substrate.

The plurality of light sources may be alternately opposite in illumination direction according to the arrangement order in the unit of at least one light sources.

The display apparatus may further include a light source module arranged on both ends of the plurality of light guide plates, wherein the illumination directions of the plurality of light sources provided in the light source module arranged on both ends of the plural light guide plates are directed to a central axis of the display area of the display panel.

The light source module may include a transparent substrate, and the plurality of light sources may be mounted on at least one lateral side of the transparent substrate.

The transparent substrate may include transparent electric wiring to drive the plurality of light sources.

The light guide plate divided in plural may be divided according to a column or row direction.

According to a further another aspect of the present invention, there is provided a television including a receiving unit receiving a broadcasting signal; an image processing unit processing the broadcasting signal received by the receiving unit to be displayable as an image; a display unit having a display panel and a backlight unit supplying light to the display panel, and displaying the image processed by the image processing unit, wherein the backlight unit includes a plurality of light guide plates outputting light to each of the divided display areas of the display panel; and a plurality of light sources generating light to be inputted into a lateral side of the each light guide plate, arranged corresponding to the lateral side of each light guide plate, wherein the plurality of light sources are arranged in such a manner that among the plurality of light sources arranged corresponding to the lateral side of one of the light guide plate, a first illumination direction by at least a part of the light sources is different from a second illumination direction by at least a part of the other light sources arranged corresponding to the lateral side of the one of the light guide plates.

The first illumination direction and the second illumination direction may be symmetrical to each other.

The television may further include a light source module having the plurality of light sources arranged serially along the lateral side of the each light guide plates, and a light source module has at least one light source illuminated toward the first illumination direction and at least one light source illuminated toward the second illumination direction.

A plurality of light source blocks including one, or two or more light sources adjacent to each other may be formed according to the arrangement order of the plurality of light sources, and the two adjacent light source blocks may have different illumination directions between each other.

The light source module may include a transparent substrate, and the plurality of light sources may be mounted on at least one lateral side of the transparent substrate.

The transparent substrate may include transparent electric wiring to drive the plurality of light sources.

The plurality of light sources may be divided into a plurality of light source groups in the unit of at least one light source, and the television may further include a controller performing local dimming by controlling the brightness per each light source group.

The light source may include a light emitting diode (LED) component.

The above and other aspects of the present invention will become apparent and more readily appreciated from the following description of the exemplary embodiments, taken in conjunction with the accompanying drawings of which:
FIG. 1 is an exploded perspective view of a display apparatus according to a first exemplary embodiment of the present invention;
FIG. 2 is a top plan view illustrating light guide plates and light source modules of the display apparatus of FIG. 1;
FIG. 3 is a perspective view illustrating a part of the light guide plates and a part of the light source modules of FIG. 2;
FIG. 4 is a top plan view illustrating an illumination direction of each light source in the display apparatus of FIG. 1 and a graph illustrating a brightness distribution according to the illumination directions;
FIG. 5 is a top plan view illustrating an illumination direction of each light source according to a second exemplary embodiment of the present invention and a graph illustrating a brightness distribution according to the illumination directions;
FIG. 6 is a top plan view illustrating an illumination direction of each light source according to a third exemplary embodiment of the present invention;
FIG. 7 is a top plan view illustrating a part of the light guide plates and a part of the light source modules, having a different configuration from FIG. 3; and
FIG. 8 is a block diagram illustrating a configuration of the display apparatus according to an exemplary embodiment of the present invention.

Hereinbelow, exemplary embodiments of the present invention will be described in detail with reference to the accompanying drawings, in such a manner that the persons having ordinary knowledge in the related art to the present invention can easily embody it.

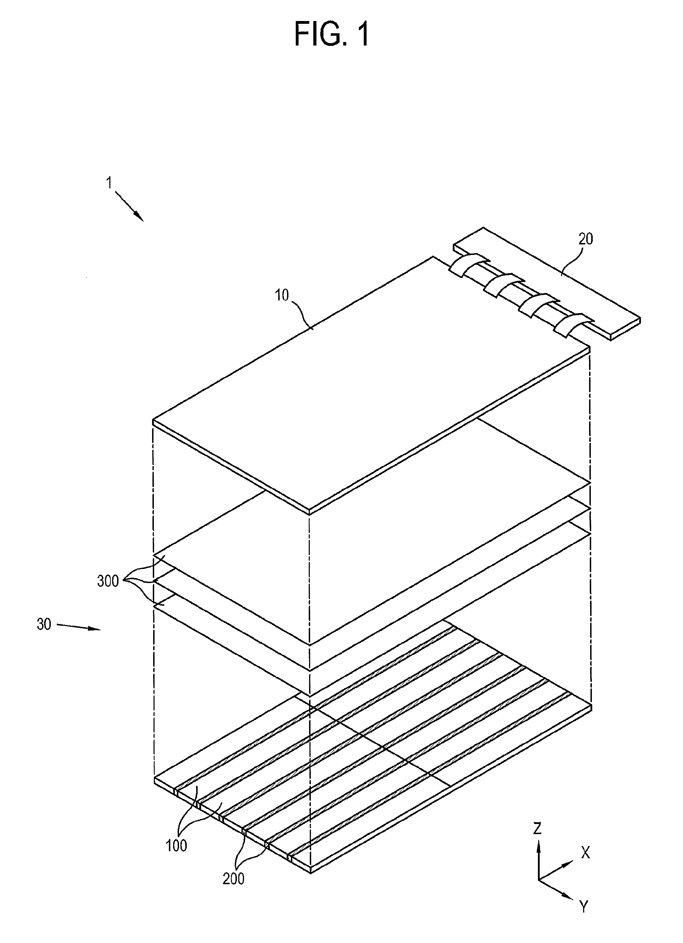

FIG. 1 is an exploded perspective view schematically illustrating a display apparatus 1 according to a first exemplary embodiment of the present invention. FIG. 1 illustrates a schematic configuration of the display apparatus 1 with respect to this exemplary embodiment, in which some elements are omitted in order to clearly represent a technical concept of the present invention. For example, the display apparatus 1 according to the first exemplary embodiment of the present invention may be a television or a monitor for a personal computer (PC), and it may include a tuner unit receiving broadcasting signals, a signal receiving unit receiving image signals from image displaying devices such as a PC or a digital versatile disk (DVD) and the like, a signal processing unit performing various signal processes with respect to received signals, a user input unit receiving an input from a user, and a power supply unit supplying power to each element.

As illustrated in FIG. 1, a display apparatus 1 according to this exemplary embodiment includes a display panel 10 displaying an image thereon, a driving circuit board 20 driving the display panel 10, and a backlight unit 30 generating light and supplying the light to the display panel 10 in order to display the image thereon.

The directions shown in FIG. 1 will be described. X, Y and Z directions indicate width, length and height, respectively. The display panel 10 is displayed on an X-Y plane, and the backlight unit 30 and the display panel 10 are stacked along the Z direction. The drawings including FIG. 1 and exemplary embodiments of the present invention will be described based on the definition of each direction as described above. Here, opposite directions of X, Y and Z directions will be referred to as -X, -Y and -Z directions, and the X-Y plane is a plane formed on an axis of the X direction and an axis of the Y direction.

Each element of the display apparatus will be described.

According to this exemplary embodiment, the display panel 10 is embodied by a liquid crystal panel. A liquid crystal layer (not illustrated) is filled in between two substrates (not illustrated), and the display panel 10 displays an image by adjusting an arrangement of the liquid crystal layer (not illustrated). Light from the backlight unit 30 is supplied to the display panel 10, in order to display an image on a display area thereof. The display area is in parallel with the X-Y plane.

The driving circuit board 20 is electrically connected to one side of the display panel 10, supplying a driving signal to the display panel 10. When the driving signal is supplied from the driving circuit board 20, the liquid crystal layer (not illustrated) of the display panel 10 is rotated by a predetermined angle. As a result, the transmission property of light varies in the unit of each cell (not illustrated) constituting the display area of the display panel 10. Thus, an image can be displayed on a display area of the display panel 10.

The backlight unit 30 is arranged in the back face of the display panel 10, in order to supply light to the display panel 10. The backlight unit 30 includes a plurality of light guide plates 100 transmitting light to the display areas of the display panel 10, a plurality of light source modules 200 generating light and inputting the light into the plurality of light guide plates 100, and a plurality of optical sheets 300 adjusting the property of light outputted from the plurality of light guide plates 100.

The plurality of light guide plates 100 are plastic lenses extruded from acryl molding, and uniformly transmit light input from the light source modules 200 to the entire display area of the display panel 10. Each of the plurality of light guide plates 100 illustrated in FIG. 1 is shaped as a rectangle extended in the X direction, but the number, shape, extension direction, etc. thereof do not limit the technical concept of the present invention.

Forming a light transmitting pattern on each surface of the plurality of light guide plates 100 can enhance the uniformity of light outputted from the plurality of light guide plates 100 and adjust the amount of the output light. That is, the light amount output from each of the light guide plates 100 may vary depending upon how the light transmitting pattern is formed.

The plurality of light guide plates 100 are arranged in parallel on the X-Y plane and output the light to the Z direction with respect to the display area of the display panel 10.

According to this exemplary embodiment, if the X direction is a width direction of the display area and the Y direction is a length direction of the display area, the light guide plates 100 are arrayed in plural with respect to both the width direction and the length direction of the display area. However, this is merely an example of arraying the plurality of light guide plates 100, and this array relation does not limit the technical concept of the present invention.

The plurality of light source modules 200 generate light to be supplied to the display panel 10. Each of the plurality of light source modules 200 is arranged adjacent to a lateral side of a light guide plate 100 so that the light generated thereby can be inputted into the light guide plate 100. The plurality of light source modules 200 can be arranged corresponding to the plurality of light guide plates 100. That is, like the plurality of light guide plates 100, the plurality of light source modules 200 can be extended along the X direction. In this exemplary embodiment, each of the light source modules 200 is arranged between a pair of light guide plates 100 arranged adjacently along the Y direction and/or one lateral side of the light guide plate 100 arranged in the most exterior area of the Y direction.

The light generated from each of the light source modules 200 is inputted into respective light guide plates 100, directed in parallel with the X-Y plane, and then outputted from each light guide plate 100 to the Z direction, to then be inputted into the display panel 10. The display panel 10 driven by the driving circuit board 20 can form an image on the display area parallel with the X-Y plane because of the input light.

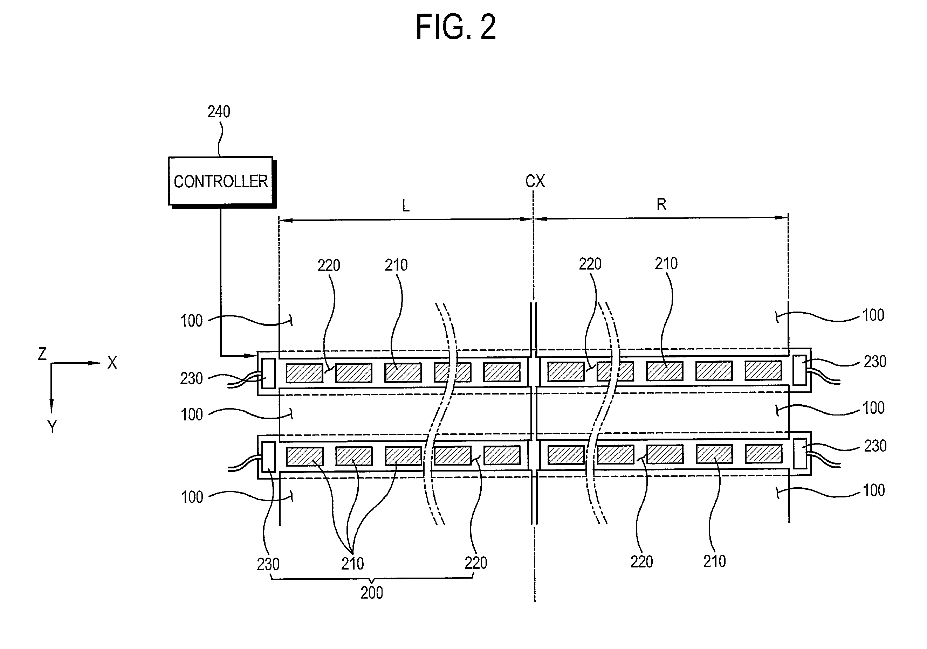

The light source modules 200 and the light guide plates 100 will be described in more detail with reference to FIG. 2. FIG. 2 is a top plan view showing light guide plates 100 and light source modules 200 of the display apparatus of FIG. 1.

As illustrated in FIG. 2, this exemplary embodiment divides the display area into a left display area L and a right display area R, based on a predetermined CX line which separates the X direction width of the display area into two.

The plurality of light guide plates 100 are arrayed along the Y direction on the left area L and the right area R. The light source modules 200 are extended along the X direction between adjacent light guide plates 100. Based on the CX line, arrangements of the light guide plates 100 and the light source modules 200 are symmetrical in the left side area L and the right side area R.

A light source module 200 includes a plurality of light sources 210 arranged serially in the X direction along a lateral side of the light guide plate 100, a light source module substrate 220 mounting the plurality of light sources 210 thereon, and a power input unit 230 installed on the light source module substrate 220 in order to supply power to the light sources 210. The light source module 200 may further include a controller 240 connected to the light source module substrate 220, in order to control switching on and off of each light source 210. In this exemplary embodiment, the controller 240 controls each light source 210 mounted on the light source module substrate 220 as a separate element. However, the technical concept of the present invention is not limited thereby, and the controller 240 may be integrally combined with the light source module substrate 220.

According to the present exemplary embodiment, the light source 210 is embodied as a light-emitting diode (LED) component, which is switched on and off according to a control by the controller 240. The light source 210 can adjust an illumination direction according to a form in which it is mounted on the light source module substrate 220.

Each light source 210 mounted on a light source module substrate 220 may include a blue LED, a green LED and a red LED, and each light source 210 can form a white light having an excellent color reproduction capability, by mixing the blue light, the green light and the red light discharged from the LEDs of respective colors. However, this embodiment is merely by way of example. Alternatively, the light source 210 may include a white LED directly generating the white light.

The controller 240 performs an individual or integrated switching control of each light source 210 mounted on the light source module substrate 220. The plurality of light sources 210 mounted on the light source module substrate 220 may form a plurality of light source blocks, each including a plurality of adjacent light sources 210 according to the arrangement sequence along the X direction, that is, a plurality of light source groups each having at least one light source 210. The controller 240 controls individually switching on and off of each light source block so as to adjust the brightness per each light source block, thereby executing a local dimming. The light source module substrate 220 may also control individual switching on and off of the light sources 210 one by one.

The local dimming divides a display area of the display panel 10 into plural areas and adjusts individually the brightness value of a concerned divided display area, according to a gray level value of each divided area. That is, the controller 240 turns on a light source block corresponding to a bright region of a displayed image, and turns on a light source block corresponding to a dark region of the displayed image with a relatively low brightness or turns it off. Accordingly, energy consumption can be reduced by turning off the power to the light source 210, and the vividness of the image can be improved by clarifying a difference in brightness between an image region having high brightness and an image region having low brightness.

The power input unit 230 is installed on one end of the light source module 220, supplying power to the plurality of light sources 210 mounted on the light source module substrate 220. The power input unit receives power from a power supply unit (not illustrated) of the display apparatus 1. To avoid any interference in power reception, the power input unit is installed on the most outer region of the entire backlight unit 30.

FIG. 2 illustrates that the power input unit 230 is arranged on the most outer region of the -X direction in the left region L and on the most outer area of the X direction in the right region R. By this disposition, the power input unit 230 is configured not to interfere with the configurations of the light guide plates 100 and the light sources 210, and the passage of light.

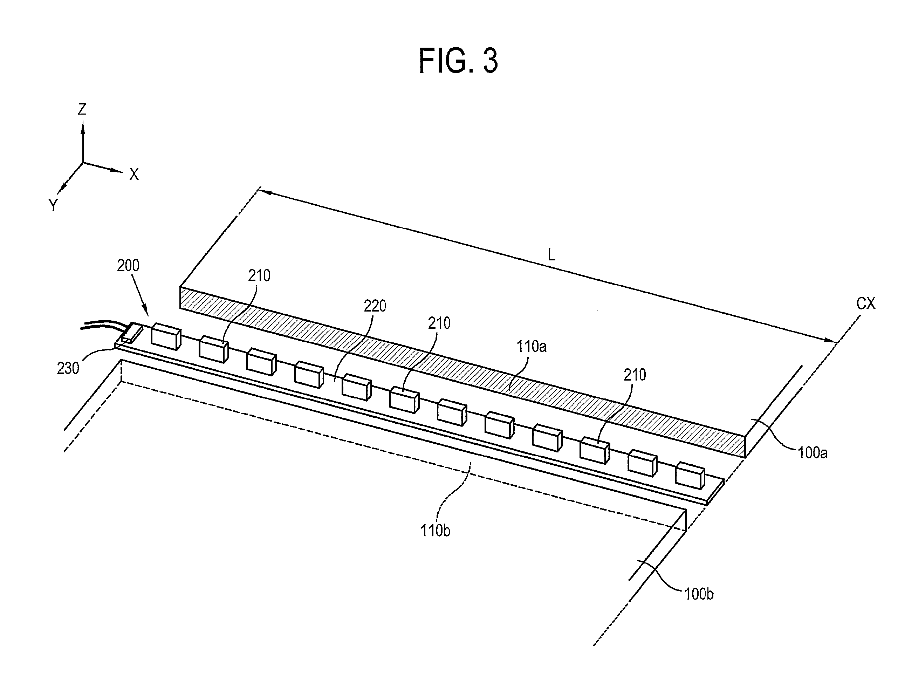

A form of the light generated by the light source 210 being input into the light guide plate 100 will be described with reference to FIG. 3. FIG. 3 is a perspective view illustrating disposition forms of a light guide plate 100 and a light source module 200 of the left region L in FIG. 2. FIG. 3 illustrates that the light guide plate 100 and the light source module 200 are arranged with a wide distance between them, but this disposition is selected simply for the sake of convenience in order to clearly show the respective elements of exemplary embodiments of the present invention.

As illustrated in FIG. 3, a first light guide plate 100a and a second light guide plate 100b are arranged along the Y direction in the left region L from the CX line. The first light guide plate 100a and the second light guide plate 100b have a first lateral side 110a and a second lateral side 110b respectively, extended along the X direction. The first lateral side 110a and the second lateral side 110b face each other.

Between the first lateral side 110a and the second lateral side 110b facing each other is arranged the light source module substrate 220. A plurality of light sources 210 are arranged serially along the X direction.

Depending upon how the light source 210 is mounted on the light source module substrate 220, an illumination direction of the light source 210 may be directed to the -Y direction or the Y direction. The light directed to the -Y direction is inputted into the first light guide plate 100a through the first lateral side 110a, and the light directed to the Y direction is inputted into the second light guide plate 100b through the second lateral side 110b.

According to this exemplary embodiment, the plurality of light sources 210 included in the backlight unit 30 are respectively arranged in such a manner that at least some of the light sources 210 have a first illumination direction different from a second illumination direction of at least some of the other light sources 210. By this arrangement, the uniformity in brightness can be improved in the entire display area.

The light sources 210 outputting the light to the first illumination direction and the light sources 210 outputting the light to the second illumination direction can be included in the same light source module 200. Or the light sources included in a light source module 200 may have the same illumination direction, or they may be provided to have different illumination directions for each light source module 200.

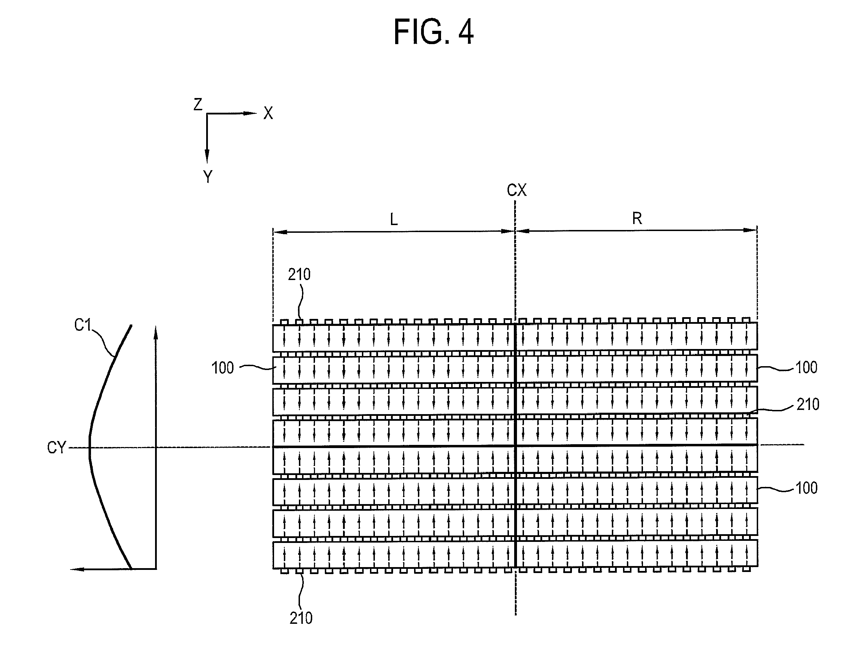

A method of arranging the light sources 210 according to this exemplary embodiment will be described with reference to FIG. 4. FIG. 4 is a top plan view showing illumination directions of each light source 210 and a graph illustrating the brightness distribution according to the illumination direction.

In FIG. 4, the right top plan view illustrates a configuration of the light guide plate 100 and the light sources 210 of FIG. 1 in the -Z direction. In order to clearly illustrate the present invention, the light source module substrate 220 and the power input unit 230 are not illustrated therein. A curve C1 of the left graph indicates a brightness distribution in the display area along the Y direction length of the light guide plate 100 and the light source 210. The vertical axis of the graph corresponds to the Y direction position of the light guide plate 100 and the light source 210 shown in the right of the graph, and the horizontal axis indicates the brightness.

As illustrated in FIG. 4, the light guide plate 100 and the light sources 210 are respectively arranged in the left region L and the right region R based on the CX line. This arrangement form depends on the configurations of the light guide plate 100 and the light sources 210 as described above. A plurality of light guide plates 100 correspond to the divided display areas.

A predetermined CY line having a difference of 90 degrees with respect to the CX line and separating the Y direction width of the display area into two regions is illustrated.

The plurality of light sources 210 according to this exemplary embodiment are arranged in such a way that their illumination directions are opposite to each other based on the CY line. The illuminating direction of each light source 210 is formed symmetrically based on the CY line, and the light sources 210 of the left region L and the light sources 210 of the right region L based on the CX line have identical illumination directions. In this case, it can be known that the light sources 210 included in a light source module 200 have the same illumination direction.

With respect to this configuration, the brightness of the entire display area is indicated by the curve C1 and has the highest value at the CY line 1, and the brightness is decreased as it goes toward the Y direction or the -Y direction from the CY line.

In contrast, if all of the light sources 210 shown in the drawings have the same illumination direction, e.g., the Y direction, the curve C1 will be sharply raised along the Y direction from the top edge of the display area, and the brightness will have the highest value on the bottom edge of the display area. If the brightness is the highest on the edge of the display panel 10, its visibility will be reduced, failing to give a user a sense of stability.

In this case, as the light amount needs to be adjusted according to the arrangement order in the Y direction of the light guide plate 100, there is a need to differently apply a light transmitting pattern to the light guide plate 100 depending upon the position of the light guide plate 100. This will increase the manufacturing facilities required for the light guide plate 100.

According to the exemplary embodiment shown in FIG. 4, a slope of the curve C1, that is, a slope of the brightness distribution, becomes smooth, compared to a case in which all the light sources 210 have the same illumination directions as described above, and the highest point of the brightness is formed in the central area of the CY line, i.e., the display area. If the highest point of the brightness is positioned in the central region of the display area, the visibility is improved, compared to a case in which the brightness highest point is in the edge of the display area, giving the user a sense of stability. In addition, the patterns of the light guide plates 100 may be reduced relatively in kind.

A case that the upper light sources 210 and the lower light sources 210 are not opposite to each other but back each other, differently from FIG. 4, can be considered. In this case, it is possible to make the slope of the brightness distribution small, compared to a case that all the light sources 210 have the same illumination direction, and an improvement in the uniformity of brightness with respect to the display area can be expected.

However in this case, as the highest point of the brightness is formed in one end of the Y direction and in one end of the -Y direction of the display area rather than in the CY line, the case of FIG. 4 is considered as being relatively excellent in respect of the visibility.

As described above, the brightness uniformity of the display area can be improved by arranging the light sources 210 in different illumination directions according to the present exemplary embodiment.

The first exemplary embodiment described above designs the light source modules 200 and the light source module substrates 220 differently with respect to the left region L and the right region R. As illustrated in FIG. 4, the light sources 210 of the left region L and the right region R have the same illumination directions, and thus, if the light source modules 200 of the left region L are applied to the right region R, the illumination directions become reversed because of the arrangement of the power input unit 230. Thus, the light source modules 200 cannot be applied commonly both to the left region L and the right region R.

Accordingly, it would be more desirable to make the light source module 200 used in common, and further to make a slope of the brightness distribution of the display area slower than the first exemplary embodiment.

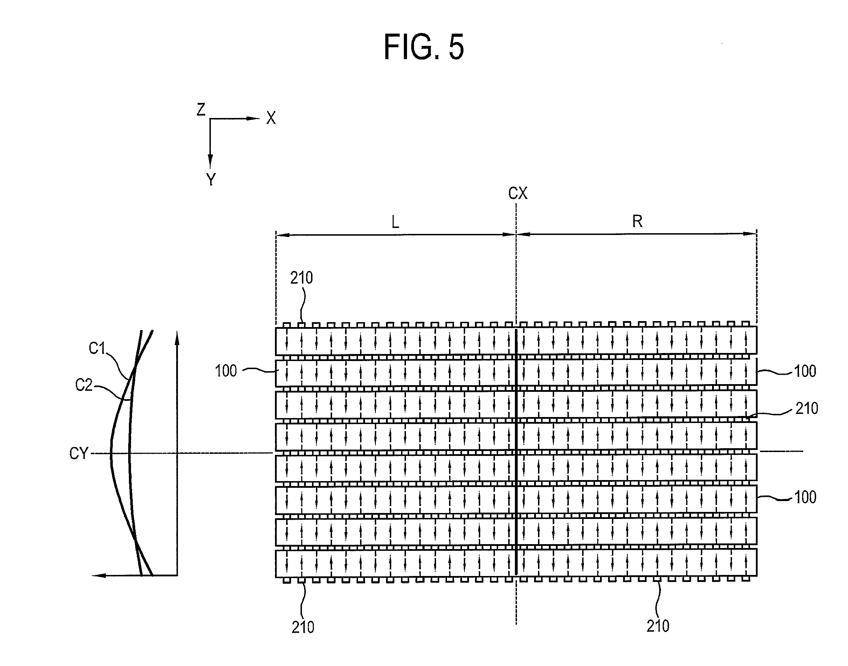

The second exemplary embodiment of the present invention having this configuration will be described with reference to FIG. 5. FIG. 5 is a top plan view illustrating that the illumination directions of the light sources 210 are different from the first exemplary embodiment, and is a graph illustrating the brightness distribution thereof. The first exemplary embodiment can apply for the basic description of the directions, lines and configurations illustrated in FIG. 5; thus, the detailed description thereof will be omitted herein.

The left region L will be first described. As illustrated in FIG. 5, the light sources 210 along the X direction are arranged to have different illumination directions from the other light sources 210 adjacent to them. Each of the light sources 210 within a light source module 200 is selectively arranged to have any one of the first illumination direction and the second illumination direction different from the first illumination direction, as predetermined. To describe in detail, each of the light sources has an illumination direction in the Y direction or -Y direction according to the arrangement order thereof.

In summary, the light sources 210 in a light source module 200 are alternately arranged to have opposite illumination directions according to the arrangement order in the unit of one or more light sources 210.

The right region R has also an illumination direction in a zigzag form, identically to the left region L. Each light source 210 included in the light source module 200 is arranged to have an illumination direction in an opposite direction along the arrangement order. Accordingly, the light source module 200 of the left region L is applied to the right region L with rotation by 180 degrees based on the Z direction, and the right region R can also have an illumination direction in the zigzag form.

Different from the first exemplary embodiment, this exemplary embodiment can employ the same configuration of the light source module 200 and the light source module substrate 220 with respect to the left region L and the right region R. Thus, no separate light source module 200 is needed for the left region L and the right region R.

In the left graph of FIG. 5, the curve C1 is identical to the curve C1 of FIG. 4, and the curve C2 shows a brightness distribution slope according to this exemplary embodiment. The curve C2 is similar to the curve C1 in that it has the highest brightness in the CY line but its slope is slower than the curve C1.

The second exemplary embodiment shows an improved uniformity in brightness as the brightness distribution with respect to the entire display area is uniform, as compared to the first exemplary embodiment.

As described above, a light source module 200 includes a plurality of light sources 210 arranged opposite to each other on a lateral side of a light guide plate 100. Of the plurality of light sources 210, at least a part thereof are arranged to have a first illumination direction, and at least a part of the other light sources 210 are arranged to have a second illumination direction different from the first illumination direction, thereby being capable of improving the uniformity in brightness with respect to the entire display area.

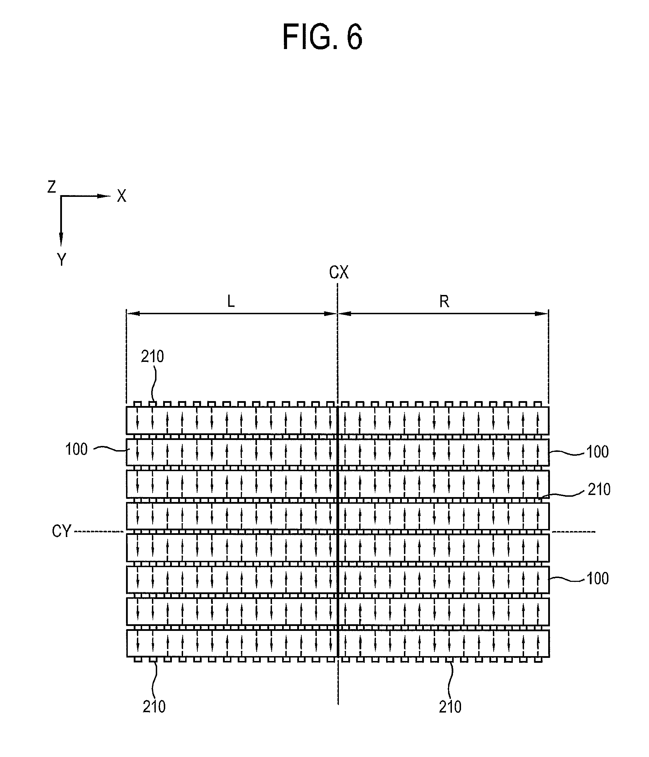

With the second exemplary embodiment, it has been described that a light source 210 has an illumination direction opposite to its adjacent light source 210, but the concept of the present invention is not limited thereto. A case different from the second exemplary embodiment in a configuration for the illumination direction of the light source 210 is referred to as the third exemplary embodiment, which will be described with reference to FIG. 6. FIG. 6 is a top plan view illustrating illumination directions of the light sources 210 according to the third exemplary embodiment.

As illustrated in FIG. 6, a plurality of light sources 210 are serially arranged in the X direction along a lateral side of each light guide plate 100. Two or more light sources 210 adjacent to each other according to this arrangement order can form a light source block. According to this exemplary embodiment, two light sources 210 adjacent to each other form a light source block, but it is not limited thereto. If needed, three or more light sources may form a light source block.

A block of light sources 210 adjacent to each other is arranged to have an illumination direction in the Y direction or in the -Y direction, which are mutually different directions. Referring to FIG. 6, two light sources 210 of a first row arranged along the Y direction provide illumination toward the Y direction and two light sources 210 of a second row provide illumination toward to the -Y direction. It can be known that this arrangement of the light source rows is repeated along the X direction. With this configuration, an improved uniformity in brightness of the display area can be expected as in the second exemplary embodiment.

From several exemplary embodiments associated with the present invention, it can be expected to improve uniformity in brightness and visibility of the display area, and further to reduce light penetration patterns of the light guide plates 100 and kinds of the light source modules 200.

The plurality of light sources 210 have different illumination directions such as Y or -Y direction, but a rate of the number of light sources 210 illuminated in the Y direction to that of light sources 210 illuminated in the -Y direction 210 is not limited: a variety of rates may be applied. However, it is desirable in view of the uniformity in brightness that a difference in numbers is less than a preset number. If this difference in number becomes bigger, the brightness level is biased to one part thereof, thereby reducing the uniformity in brightness.

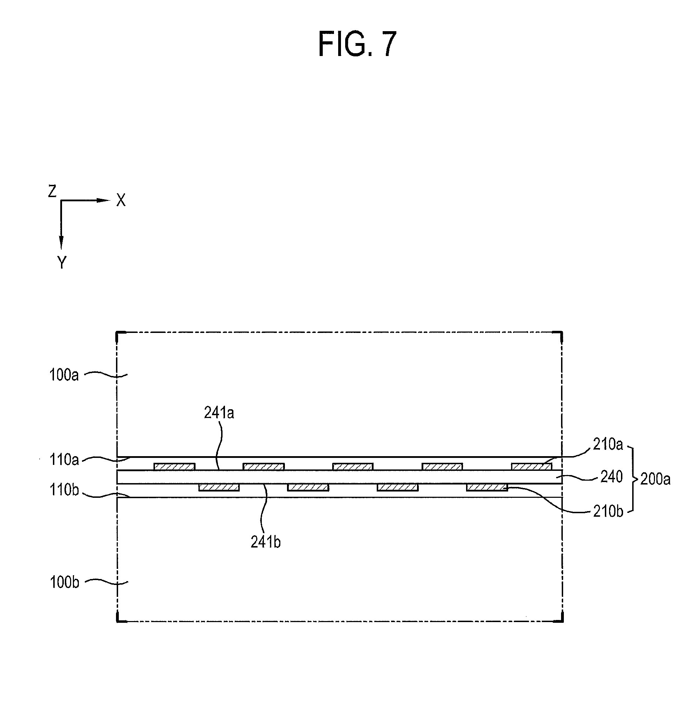

A configuration of the light source module 200 is not limited to the case of FIG. 3, but it may be varied. This will be described with reference to FIG. 7.

FIG. 7 is a top plan view illustrating the light guide plates 100a and 100b and a part of light source modules 200a, which are different in configuration from FIG. 3.

As illustrated in FIG. 7, the light source module 200a is arranged between a first light guide plate 100a and a second light guide plate 100b. The light source module 200a includes a transparent substrate 240 having planes 241a and 241b respectively corresponding to the first light guide plate 100a and the second light guide plate 100b, and a plurality of light sources 210a and 210b respectively arranged on the planes 241a and 241b of the transparent substrate 240.

The lateral side 110a of the first light guide plate 100a and the lateral side 110b of the second light guide plate 100b are arranged to be opposite to each other.

The transparent substrate 240 is made of a transparent material so as to allow light to penetrate therethrough. The transparent substrate 240 has a first plane 241a a opposite to the lateral side 110a of the first light guide plate 100a and a second plane 241b backing the first plane 241a but facing the lateral side 110b of the second light guide plate 100b. The transparent substrate 240 also has transparent electric wiring (not shown) to drive the plurality of light sources 210a and 210b. This electric wiring (not shown) can be embodied by a transparent electrode formed inside the transparent substrate 240.

The plurality of light sources 210a and 210b are mounted perpendicularly on respective planes 241a and 241b of the transparent substrate 240. The light sources 210a are arranged on the first plane 241a, and the light sources 210b are arranged on the second plane 241b. Accordingly, the light source 210a on the first plane 241 a provides illumination toward the lateral side 110a of the first light guide plate 100a, and the light source 210b on the second plane 241b provides illumination toward the lateral side 110b of the second light guide plate 100b.

The light sources 210a and 210b respectively arranged on the first plane 241a and the second plane 241b along the X direction are arranged alternately to prevent interference of their mutual illumination directions due to the arrangement position. Thus, in view of the entire display area, it may minimize a mutual interference between the light illuminated toward the Y direction and the light illuminated toward the -Y direction.

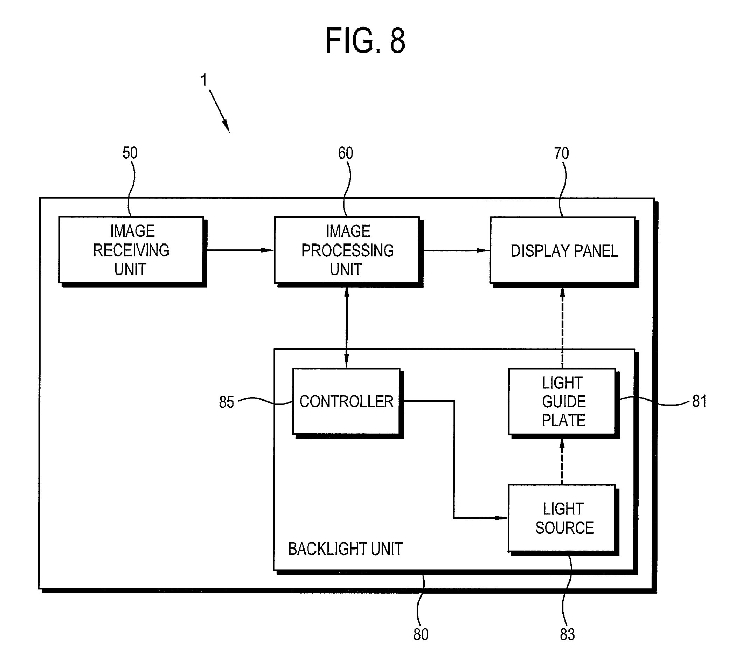

The exemplary embodiment described above can be applied to the display apparatus 1 embodied variously in forms. A case where the display apparatus 1 is a TV will be described with reference to FIG. 8 with an example applicable to this exemplary embodiment.

FIG. 8 is a block diagram illustrating a configuration of the display apparatus according to an exemplary embodiment of the present invention. A solid arrowed line in FIG. 8 indicates transmission of an image signal or a control signal and a dotted arrowed line indicates transmission of light.

As illustrated in FIG. 8, the display apparatus according to this exemplary embodiment includes an image receiving unit 50 receiving an image, an image processing unit processing the image received by the image receiving unit 50, a display panel displaying thereon the image processed by the image processing unit 60, and a backlight unit 80 supplying the light so that the image is displayed on the display panel 70.

The backlight unit 80 includes a plurality of light guide plates 81 outputting light to each divided display area of the display panel 70, a plurality of light sources 83 generating light inputted into a lateral side of each light guide plate 81, being arranged oppositely on the lateral side of each light guide plate 81 and forming a plurality of light source groups, and a controller 85 controlling the brightness of each group of light sources.

The image receiving unit 50 may have a variety of specifications. For example, where the display apparatus 1 is a TV, the image receiving unit 50 may be configured to receive a radio frequency (RF) signal transmitted from a broadcasting station (not illustrated) wirelessly, or may receive image signals according to composite video, component video, super video, SCART, high definition multimedia interface (HDMI) specifications and so on. Or, where the display apparatus 1 is a computer monitor, the image receiving unit 50 may be configured to receive an image signal of a D-SUB that can transmit RGB signals according to a VGA method, a digital video interactive (DVI) or HDMI specifications.

With respect to the image signal transmitted from the image receiving unit 50, the image processing unit performs a variety of image processes. The types of image processes performed by the image processing unit 60 are not limited. For example, it may include decoding and encoding corresponding to a variety of video formats, de-interlacing, frame refresh rate conversion, scaling, noise reduction for image quality improvement, detail enhancement and so on.

The image processing unit 60 may be a separate configuration to independently perform each process, or an integral configuration to incorporate several functions.

When the backlight unit 80 attempts local dimming, the image processing unit 60 transmits image information for the local dimming to the controller 85. Based on the image information received from the image processing unit 60, the controller 85 can perform the local dimming by controlling the brightness of light source 83 group in plural.

Configurations of the display panel 70 and the backlight unit 80, the light guide plates 81, the light sources 83 and the controller 85 as sub-configurations of the backlight unit 80 are substantially identical to the configurations described with respect to the previous exemplary embodiments, and thus, detailed description thereof will be omitted herein.

Although a few exemplary embodiments of the present invention have been illustrated and described in details, the present invention shall be limited thereto, and can be carried out in a various manner, within the scope of the claims as claimed in the specification. The scope of this patent will be determined by the accompanying claims and the equivalent thereof.

## Claims

1. A display apparatus comprising:
a display panel which is divided into display areas;
a plurality of light guide plates which output light to the display areas of the display panel; and
a plurality of light sources, each of which generates light to be inputted into a lateral side of a respective of the light guide plates, and is arranged corresponding to the lateral side of the respective light guide plate,
wherein the plurality of light sources are arranged such that among the light sources arranged corresponding to the lateral side of one of the light guide plates, a first illumination direction of some of the light sources is different from a second illumination direction of others of the light sources.

2. The display apparatus according to claim 1, wherein the first illumination direction and the second illumination direction are opposite to each other.

3. The display apparatus according to claim 1, further comprising a plurality of light source modules on which the plurality of light sources are serially arranged, wherein one of the light source modules has at least one light source that provides illumination in the first illumination direction and at least one light source that provides illumination in the second illumination direction.

4. The display apparatus according to claim 3, further comprising a plurality of light source blocks, each of which comprises a light source,
wherein two adjacent light source blocks have different illumination directions.

5. The display apparatus according to claim 3, wherein each of the light source modules comprises a support substrate on which electric wiring for the plurality of light sources is formed, and
the plurality of light sources are mounted perpendicularly on the support substrate.

6. The display apparatus according to claim 3, wherein each of the light source modules comprises a transparent substrate, and
the plurality of light sources are mounted on at least a lateral side of the transparent substrate.

7. The display apparatus according to claim 6, wherein the transparent substrate comprises transparent electric wiring that drives the plurality of light sources.

8. The display apparatus according to claim 1, wherein the plurality of light sources are divided into a plurality of light source groups in units of at least one light source, and
the display apparatus further comprises a controller which performs local dimming by controlling a brightness of each light source group.

9. The display apparatus according to claim 1, wherein the light source comprises a light emitting diode (LED).

10. The display apparatus according to claim 1, further comprising:
an image receiving unit which receives an image; and
an image processing unit which processes the image received by the image receiving unit to be displayable in the display panel.

11. The display apparatus according to claim 1, wherein the plurality of light sources have alternately opposite illumination directions in units of at least one light source.

12. The display apparatus according to claim 1, wherein the plurality of light guide plates are arranged according to a column or row direction.

13. A television comprising:
a receiving unit which receives a broadcasting signal;
an image processing unit which processes the broadcasting signal received by the receiving unit to be displayable as an image; and
a display unit comprising a display panel and a backlight unit which supplies light to the display panel, wherein the display unit displays the image processed by the image processing unit,
wherein the backlight unit comprises:
a plurality of light guide plates which output light to each display area of the display panel; and
a plurality of light sources, each of which generates light to be inputted into a lateral side of a respective one of light guide plates, and is arranged corresponding to the lateral side of the respective light guide plate,
wherein the plurality of light sources are arranged such that among the light sources arranged corresponding to the lateral side of one of the light guide plates, a first illumination direction of some of the light sources is different from a second illumination direction of others of the light sources.

14. The television according to claim 13, further comprising a light source module on which the plurality of light sources are serially arranged along the lateral side of the each light guide plates,
wherein the light source module has at least one light source that provides illumination in the first illumination direction and at least one light source that provides illumination in the second illumination direction.

15. The television according to claim 13, wherein the plurality of light sources are divided into a plurality of light source groups in units of at least one light source, and
the television further comprises a controller which performs local dimming by controlling a brightness of each light source group.
